Europäisches Patentamt

European Patent Office

Office européen des brevets

(11) Veröffentlichungsnummer: **0 358 788**

**A1**

# (12) EUROPÄISCHE PATENTANMELDUNG

(21) Anmeldenummer: 88114943.9

(22) Anmeldetag: 13.09.88

(51) Int. Cl.⁵: **G01C 9/20 , G01C 9/06**

(43) Veröffentlichungstag der Anmeldung:
**21.03.90 Patentblatt 90/12**

(84) Benannte Vertragsstaaten:
**AT BE CH DE ES FR GB GR IT LI LU NL SE**

(71) Anmelder: **G. + G. TECHNICS AG**
**Leimenweg 4**
**CH-4419 Lupsingen/BL(CH)**

(72) Erfinder: **Beitzer, George**
**17 Fenimore Lane**
**Huntington NY 11743(US)**
Erfinder: **Goldsobel, Norman**
**28 Bethal Lane**
**Commack NY 11725(US)**
Erfinder: **Marianovsky, Eli**
**2900 Ocean Avenue, Apartment 3B**
**Brooklyn NY 11235(US)**
Erfinder: **Michels, John**
**1 Roxbury Road**
**Rockville Centre NY 11570(US)**

(74) Vertreter: **Tergau, Enno et al**
**Patentanwälte Tergau & Pohl Postfach 11 93**
**47 Hefnersplatz 3**
**D-8500 Nürnberg 11(DE)**

(54) **Elektrolytischer Neigungsfühler.**

(57) Es wird ein elektrolytischer Neigungsfühler beschrieben, der nach Art einer Wasserwaage arbeitet. Im Gefäß des Fühlers sind wenigstens drei Elektroden angeordnet, die je nach Neigung von der Gasblase unterschiedlich benetzt werden. Um Neigungsfühler dieser Art in großer Serie mit geringen Toleranzabweichungen herstellen zu können, wird vorgeschlagen, daß das Gefäß (2) aus mehreren Teilen (11,12) besteht, die flüssigkeits- und gasdicht miteinander verbunden sind, wobei wenigstens eines dieser Teile als Elektrodenträger- und -durchführteil für die Ableitungen der auf dem Teil angeordneten Elektroden (3,4,5) ausgebildet ist und wenigstens ein weiteres Teil (12) als Abdeck- oder Verbindungselement für das oder die Elektrodenträgerteile dient.

FIG.2

Xerox Copy Centre

## Elektrolytischer Neigungsfühler

Die Erfindung betrifft einen elektrolytischen Neigungsfühler mit wenigstens drei gegeneinander isolierten Elektroden, die in einem gasdicht verschlossenen Gefäß angeordnet und durch die Gefäßwand hindurch nach außen geführt sind. Das Gefäß ist teilweise mit einer elektrisch leitfähigen Flüssigkeit und der Rest mit Luft oder einem Inertgas gefüllt. Die Elektroden sind dabei so angeordnet, daß wenigstens eine Elektrode, die sogenannte Gegenelektrode, in jeder Gebrauchslage des Neigungsfühlers von der Flüssigkeit berührt wird und daß die anderen Elektroden in der Nullage des Neigungsfühlers in gleichem Maße, vorzugsweise jedoch nur teilweise, von der Flüssigkeit bedeckt werden.

Derartige Neigungsfühler sind bekannt. Sie haben eine hohe Empfindlichkeit und gestatten es, Winkelabweichungen von der Nullage mit großer Präzision zu messen. Die Empfindlichkeit ist derart, daß Winkelabweichungen bis zu einer Bogenminute genau erfaßt werden können. Zur Durchführung einer Messung wird die Leitfähigkeit der Gesamtanordnung gemessen, wobei der Neigungsfühler meist in einer Brückenschaltung mit Wechselspannung zwischen etwa 20 Hz und 20 kHz, vorzugsweise 400 Hz oder mehr beaufschlagt wird. Je nach Neigung des Gerätes ändert sich die Bedeckung der Meßelektroden mit elektrisch leitfähiger Flüssigkeit und damit auch der gemessene Leitfähigkeitswert.

Die Neigungsfühler arbeiten also ähnlich wie eine Wasserwaage, jedoch mit dem Unterschied, daß vorhandene Flüssigkeit, die hier eine Elektrolyt-Flüssigkeit ist, daß die erwähnten Elektroden vorhanden sind und die Flüssigkeit diese ganz oder teilweise berührt, so daß je nach Neigung der Waage der elektrische Widerstand zwischen den Elektroden oder - was auf das gleiche hinausläuft - der elektrische Leitwert eine andere Größe zeigt.

Die vorbekannten Neigungsfühler dieser Art werden in handwerklicher Arbeit vom Glasbläser erzeugt. Sie haben die Form kleiner Glasröhrchen, in deren Enden beispielsweise je eine Meßelektrode eingeschmolzen ist. Die Gegenelektrode ist etwa in der Mitte zwischen den beiden Meßelektroden in die Rohrwand eingeschmolzen. Das Röhrchen ist meist etwas gebogen, so daß es angenähert die Form eines Kreisbogensegmentes aufweist. Auch andere Formen derartiger Neigungsfühler sind bekannt, beispielsweise solche in Knopfform, die in besonders großen Winkelbereichen einsetzbar sind.

Allen vorbekannten Neigungsfühlern ist gemeinsam, daß sie in handwerklicher Einzelfertigung erzeugt werden und folglich beachtliche Streuungen ihrer Meßcharakteristik aufweisen. Dieser Nachteil wird in der Regel dadurch behoben, daß durch Einzelmessungen jeder Neigungsfühler getestet wird und entsprechend dem Testergebnis ein geeigneter Fühler für einen gegebenen Anwendungszweck ausgesucht wird.

Neigungsfühler der vorbekannten Art finden typischerweise im Straßenbau, Gleisbau, Hochbau und bei Wasserbaumaschinen Anwendung. Sie werden auch bei Kränen sowie Untertage- und Übertage-Abräummaschinen, ferner bei Tunnelbohrmaschinen, Baggern und sogenannten Baulasern ein gesetzt. Sie finden ferner Anwendung in der Luft- und Raumfahrt, in der Astronomie und Raketentechnik sowie in zahlreichen weiteren, teils neuartigen Technologien, bei denen es darauf ankommt, die Lage eines Bauelementes im Raum exakt zu erfassen und gegebenenfalls auch einen bestimmten Wert einzustellen.

Im Hinblick auf diese zahlreichen Anwendungsgebiete besteht die Aufgabe, elektrolytische Neigungsfühler derart aufzubauen und in ihrer Konstruktion festzulegen, daß sie nicht in handwerklicher Arbeit, sondern nach modernen Fertigungsmethoden maschinell erzeugt werden können. Außerdem soll erreicht werden, daß die Neigungsfühler eine möglichst geringe Streuung ihrer elektrischen Eigenschaften von Exemplar zu Exemplar aufweisen, so daß das lästige Aussuchen der Einzelexemplare sowie die individuelle Eichung entfallen kann.

Zur Lösung dieser Aufgabe wird von einem elektrolytischen Neigungsfühler mit folgenden bekannten Merkmalen ausgegangen:
- Der Neigungsfühler hat wenigstens drei in einem gasdicht verschlossenen Gefäß angeordnete, nach außen geführte und gegeneinander isolierte Elektroden;
- das Gefäß ist teilweise mit einer elektrisch leitfähigen Flüssigkeit und der Rest mit Luft oder einem Inertgas gefüllt;
- wenigstens eine Elektrode (die sogenannte Gegenelektrode) ist so angeordnet, daß sie in jeder Gebrauchslage des Neigungsfühlers von der Flüssigkeit berührt wird;
- die anderen Elektroden (Meßelektroden) sind so angeordnet, daß sie in der Nullage des Neigungsfühlers in gleichem Maße, vorzugsweise jedoch nur teilweise, von der Flüssigkeit bedeckt werden;

Erfindungsgemäß ist der Neigungsfühler durch folgende Merkmale gekennzeichnet:
- Das Gefäß besteht aus mehreren Teilen, die flüssigkeits- und gasdicht miteinander verbunden sind;

- wenigstens eines dieser Teile ist als Elektrodenträger und Durchführteil für die Ableitungen der auf dem Teil angeordneten Elektroden ausgebildet;
- wenigstens ein weiteres Teil dient als Abdeckoder Verbindungselement für das oder die Elektrodenträgerteile.

Durch diese Aufteilung ist es möglich, in rationeller, hochpräziser Fertigungstechnik, jedoch unter Anwendung bekannter Arbeitsmethoden, zunächst das ober die elektrodentragenden Teile des Gefäßes zu erzeugen. Diese Teile können beispielsweise aus Sinterkeramik, Sinterglas oder Preßglas bestehen, wobei der Werkstoff aus den bekannten und handelsüblichen Werkstoffen derart ausgesucht wird, daß er eine über 600 °C liegende Erweichungstemperatur (t1) aufweist. Aus diesem Werkstoff wird dann das elektrodentragende Teil (oder die Teile), beispielsweise durch Pressen und Sintern, hergestellt. Gleich bei diesem Arbeitsprozeß oder auch in einem separaten Prozeß danach werden die Elektroden aufgebracht und die Elektrodenableitungen durch das Trageteil, welches z.B. die Form einer Platte aufweisen kann, hindurchgeführt. Nach Fertigstellung der die Elektroden tragenden Teile wird das andere Teil, welches z.B. aus dem gleichen Werkstoff, etwa Glas mit ebenfalls über 600 °C liegender Erweichungstemperatur bestehen kann, aufgesetzt und die erwähnten Teile über eine Zwischenglasschicht miteinander verbunden, deren Schmelztemperatur (t2) wenigstens 100 °C niedriger liegt als die Er weichungstemperatur (t1). Dieser Aufbau des Neigungsfühler hat den Vorteil, daß bei der Herstellung desselben, insbesondere beim Aufsetzen und Verbinden des zweiten Gefäßteiles auf das erste, keinerlei Verzug oder Änderung des ersten Teiles mehr eintritt. Die hohe Präzision, die bei der Herstellung der elektrodentragenden Teile, beispielsweise durch Pressen und Sintern oder auch durch Drucksintern, eingehalten werden kann und die folglich zu Teilen mit äußerst geringen Abweichungen voneinander führt, bleibt beim Zusammenbau der Gesamtvorrichtung beibehalten, woraus die erstrebte geringe Toleranzabweichung der so hergestellten Neigungsfühler resultiert.

Bei der vorstehend beschriebenen Ausführungsform des Neigungsfühlers werden die Teile mit Hilfe einer niedrigschmelzenden Zwischenglasschicht verbunden. Derartige niedrigschmelzende Gläser sind auch unter der Bezeichnung "Lotglas" bekannt. Es handelt sich um Gläser, die beispielsweise Pb0-B₂0₃-Gehalte von 20-30 Gew.% aufweisen und die dadurch den erforderlichen niedrigen Schmelzpunkt haben.

Bei einer anderen Ausführungsform des Erfindungsgegenstandes kann auf die Anwendung eines derartigen Glaslotes verzichtet werden. Bei dieser Ausführungsform sind die miteinander zu einem Gefäß zu verbindenden Teile an ihren Berührungsstellen metallisiert und mittels eines Metallotes miteinander verbunden. Das Metallisieren von Glasober Keramikteilen ist an sich bekannt. Es kann in der Weise durchgeführt werden, daß die zu metallisierenden Flächen zunächst mit einer Masses bestrichen oder bedruckt werden, die ein Kupferoder Silber-Salz sowie ein Reduktionsmittel enthält. Als Kupfersalz kommt beispielsweise Kupferchlorid oder Kupfersulfat in Betracht. Als Silbersalz wird in aller Regel Silbernitrat eingesetzt. Als Reduktionsmittel kommen organische Stoffe, wie beispielsweise Zucker, Stärke o.dgl. in Betracht. Werden Teile, die mit einer derartigen Masse bestrichen oder bedruckt sind, auf Temperaturen von 500 °C oder mehr erhitzt, so werden die in der Masse enthaltenen Metallsalze zum freien Metall reduziert. Die organischen Bestandteile der Masse verdampfen bei diesem Prozeß, so daß ein sauberer Metallbelag zurückbleibt. Dieser Metallbelag verbindet sich fest mit der Oberfläche der Glas- oder Keramikgegenstandes und bildet dadurch eine Grundlage für einen anschließenden Lötvorgang mit einem der bekannten metallischen Lotlegierungen. Als Lotlegierung können solche auf Silberbasis, aber auch solche auf Blei-Zinn-Basis angewandt werden.

Bei allen Ausführungsformen des Erfindungsgegenstandes, bei denen die beiden Teile, welche später das Gefäß des Neigungsfühlers bilden, durch eine Wärmebehandlung miteinander verbunden werden, kommt es wesentlich auf das Ausdehnungsverhalten der Werkstoffe an, aus denen die beiden Teile bestehen. Bei Versuchen hat sich gezeigt, daß die Ausdehnungskoeffizienten dieser Werkstoffe möglichst weitgehend übereinstimmen sollten. Die tolerierbaren Abweichungen liegen innerhalb einer Zehnerpotenz.

Im Hinblick auf das weite Anwendungsfeld, welches elektrolytische Neigungsfühler haben, können diese aus unterschiedlichen Werkstoffen hergestellt werden. Je nach Wahl des Werkstoffes resultiert daraus eine verschiedene Genauigkeit, die jeweils dem Einsatzzweck angepaßt werden kann. So ist es möglich, die beiden Teile, welche später das Gefäß des Neigungsfühlers bilden, durch Kleben miteinander zu verbinden. Als Klebstoff kommen Zwei-Komponenten-Kleber in Betracht, wie diese an sich bekannt sind. Auch ist es möglich, die beiden das Gefäß bildenden Teile selbst aus Kunststoffen herzustellen, wobei insbesondere für dasjenige Teil, welches die Elektroden trägt, solche Kunststoffe in Betracht kommen, die nach dem Drucksinterverfahren verarbeitet werden können. Es handelt sich hierbei um Werkstoffe wie Poly-Tetrafluorethylen oder hochfeste Silikonmassen.

Für den räumlichen Aufbau der Neigungsfühler wird vorgeschlagen, daß das die Elekroden tragende Teil eine im Randbereich liegende in sich geschlossene Nut aufweist, in der das andere Teil flüssigkeits- und gasdicht eingefügt ist. Eine derartige Nut wirkt als Führung für das einzufügende Teil, so daß dieses auch bei automatischer Montage stets die richtige Lage einnimmt. Die Nut wirkt des weiteren als Behältnis für die jeweils eingesetzte Verbindungsmasse, also beispielsweise für das Glaslot, das Metallot oder gegebenenfalls auch den Klebstoff.

Des weiteren wird vorgeschlagen, daß auch die Elektroden auf dem sie tragenden Teil in Form von metallisierten Flächen oder Bahnen angeordnet sind. Diese Flächen oder Bahnen können auf dieselbe Weise hergestellt werden wie diejenigen Metallisierungen, die zuvor erwähnt wurden und die als Lotunterlage dienen sollen.

Bei bestimmten Ausführungformen des Erfindungsgegenstandes hat es sich als vorteilhaft erwiesen, wenn zumindest die Meßelektroden mit der Längsachse des die Elektroden tragenden Teiles einen spitzen Winkel bilden. Die Elektroden selbst können dabei geradlinig ausgeführt sein oder - besser - die Form von Kreissegmenten haben. Durch diese Ausgestaltung läßt sich die Kennlinie des Neigungsfühlers beeinflussen, welche die Abhängigkeit der Leitfähigkeit vom Neigungswinkel zeigt. Die Kennlinie kann durch die Schrägstellung bzw. Kreissegment-Form linealisiert werden.

Bei anderen Ausführungsformen hat es sich als zweckmäßig erwiesen, daß das die Elektroden tragende Teil die Form einer Kreisscheibe hat, in deren Mittenbereich die Gegenelektrode als kleinere Kreisscheibe oder als Kreisring angeordnet ist und daß die Meßelektroden die Gegenelektrode als Kreisringabschnitte konzentrisch umgeben.

Schließlich trägt es zum rationellen Aufbau derartiger Meßfühler wesentlich bei, wenn die Ableitung wenigstens einer Elektrode als Hohlnadel ausgebildet ist, so daß sie außer als Elektrodenanschluß zum Füllen des Gefäßes mit Elektrolyt-Flüssigkeit und/oder Gas dienen kann.

Nich in allen Anwendungsfällen ist genügend Platz vorhanden, die Elektroden auf der Trageplatte in Form von länglichen Streifen unterzubringen. In solchen Fällen, aber auch aus anderen Gründen, kann es zweckmäßig sein, die Elektroden in Form von Drahtstiften im Neigungsfühler anzuordnen, welche senkrecht zur Trageplatte stehen. Wird ein derart aufgebauter Neigungsfühler aus der Nullage in die Meßlage geneigt, so werden die Elektroden von der Elektrolyt-Flüssigkeit bis zu unterschiedlichen Höhen benetzt, wodurch sich der Leitwert bzw. der elektrische Widerstand verschiebt. In solchen Fällen kann es zweckmäßig sein, wenn die Elektroden, zumindest die Meßelektroden, im Basisbereich eine Abdeckung aus elektrisch nicht leitendem Werkstoff aufweisen. Es kann sich bei dieser Abdeckung um einen Glas- oder Keramikmantel handeln, der die Elektroden von der Basis beginnend bis zu einer gewissen, durch den Konstrukteur festzulegenden Höhe umgibt.

Die hohe Präzision, mit der die hier vorgeschlagenen mehrteilig aufgebauten Neigungsfühler hergestellt werden können, macht es möglich, eine beliebige Außenflä che des Neigungsfühlers, beispielsweise die Basisfläche oder auch eine Seitenfläche zur Referenzfläche zu machen. Bei den bisher bekannten Neigungsfühlern war es stets erforderlich, den Fühler in ein weiteres Gehäuse einzusetzen, von welchem eine ausgewählte Fläche als Referenzfläche verwendet wurde. Diese Referenzfläche wurde exakt waagerecht ausgerichtet und der in das Gehäuse eingeklebte oder eingekittete Fühler wurde bei noch weichem Kitt bzw. Klebstoff so lange in seiner Lage korrigiert, bis der Fühler in dieser Stellung das "Nullsignal" des Leitwertes zeigte. Danach wurde gewartet, bis der Kitt erhärtet war, worauf die fertige Meßanordnung vorlag. Bei den erfindungsgemäß vorgeschlagenen mehrteiligen Meßfühlern kann sogleich eine Außenfläche des Gehäuses als Referenzfläche herangezogen werden. Es rührt dies daher, daß nach Fertigstellung der einzelnen Teile beim Zusammenbau derselben zum Gesamtfühler keinerlei Verzug oder sonstige meßbare Änderung der Abmessungen mehr eintritt. Dementsprechend wird vorgeschlagen, daß bei Meßfühlern, deren Elektroden Drahtstifte sind, die untere Fläche des die Elektroden tragenden Teiles parallel verläuft zu der Fläche, die durch die freien Enden der erwähnten Abdeckungen definiert ist. Diese Bedingung kann fabrikatorisch eingehalten werden, wonach unmittelbar ein hochpräziser verwendbarer Neigungsfühler resultiert.

Bei Neigungsfühlern anderer Bauart, die jedoch nach demselben, hier gezeigten Prinzip aufgebaut sind, nämlich bei solchen, bei denen die Elektroden als Streifen auf die Grundplatte aufgebracht sind, wird vorgeschlagen, das das elektrodentragende Teil im Gebrauchszustand eine Seitenwand bildet, deren Innenfläche mit der Außenfläche des Gefäßteiles einen rechten Winkel bildet. Auch in diesem Fall resultiert nach dem Zusammenbau unmitelbar ein gebrauchsfertiger Neigungsfühler, bei wel chem nun die besagte Seitenwand die Referenzfläche ist.

Des weiteren wird vorgeschlagen, bei solchen Neigungsfühlern, deren Grundplatte eine mehr langgestreckte, vorzugsweise rechteckige Form aufweist, dem Gefäßteil die Form eines langgestreckten Daches mit V-förmigem Querschnitt zu geben. Der First des Daches kann dabei vorzugsweise abgerundet sein. Durch diese Ausführungsform wird im Dachbereich eine Leitbahn für die vorhandene Luft- oder Inertgas-Blase geschaffen, was den Fühler gegen Vibration oder Neigungen quer zur Meßrichtung stabilisiert.

Bei manchen Anwendungfällen kommt es darauf an, einen möglichst großen Winkelbereich mit hoher Genauigkeit zu erfassen. In diesen Fällen wird mit Vorteil eine Ausführungsform gewählt, bei der das elektrodentragende Teil beispielsweise eine Kreisscheibe ist. Der Neigungsfühler wird beim Gebrauch derart montiert, daß die Oberfläche der Kreisscheibe mitsamt den darauf angeordneten Elektroden lotrecht steht. Neigungsfühler dieser Art bewähren sich immer dann, wenn nicht die Gefahr besteht, daß der Neigungsfühler quer zur lotrechten Lage gekippt ist oder Vibrationen ausgesetzt ist. Läßt sich indes eine derartige Verschiebung oder Beanspruchung nicht vermeiden, so wird eine andere Ausführungsform vorgeschlagen, die dadurch gekennzeichnet ist, daß das Gefäß aus zwei jeweils als Elektrodenträger- und Durchführteil ausgebildeten Abschlußplatten sowie einem dazwischen angeordneten ringförmigen Verbindungsteil besteht, wobei je eine Abschlußplatte an jeder Seite des Verbindungsteiles flüssigkeits- und gasdicht an diesem Verbindungsteil befestigt ist. Ein Neigungsfühler dieses Aufbaus hat demnach an jeder Stirnseite zwei Meßelektroden. Wird de Neigungsfühler nun bei Beanspru chung quer zur lotrechten Lage gekippt, so verschiebt sich die Elektrolytflüssigkeit derart, daß beispielsweise die Meßelektroden der linken Platte mehr und die Meßelektroden der rechten Platte weniger benetzt werden. Diese Änderung kann aber dadurch ausgeglichen werden, daß die beiden jeweils korrespondierenden Meßelektroden beider Platten außerhalb oder innerhalb des Meßfühlers elektrisch miteinander verbunden werden.

Beim Zusammenbau der Teile dieser Ausführungsform kommt es wesentlich darauf an, daß die beiden elektrodentragenden Teile zueinander in stets gleicher Lage sich befinden. Sie dürfen also nicht relativ zueinander verschoben oder verdreht sein. Um dies sicherzustellen, wird vorgeschlagen, daß das Verbindungsteil ein Rohrabschnitt ist, in dessen Innenraum wenigstens ein, besser aber zwei Vorsprünge hineinragen und daß die beiden Abschlußplatten Aussparungen aufweisen, die den oder die Vorsprünge als Paßmarken aufnehmen.

Diese zuletzt geschilderte Ausführungsform wird vorteilhafterweise so aufgebaut, daß auf jeder Abschlußplatte eine längsaxial in den Gefäßraum ragende, rohrförmige Mittelelektrode vorhanden ist, welche bei Betrieb der Vorrichtung als Gegenelektrode und bei der Herstellung als Füll- bzw. Luftentweichungskanäle wirken.

Die Erfindung wird im folgenden anhand der beigefügten Zeichnung näher erläutert. Es stellen dar:

Fig. 1 ein Schaltschema zum Betrieb des Neigungsfühlers;

Fig. 2 eine Ausführungsform des Neigungsfühlers in perspektivischer Darstellung und im geöffneten Zustand;

Fig. 3 eine andere Ausführungsform des Neigungsfühlers in perspektivischer Darstellung und im geöffneten Zustand;

Fig. 4 eine weitere Auführungsform (Radioröhrenform) in perspektivischer Darstellung;

Fig. 5 einen Längsschnitt durch die Ausführungsform gemäß Fig. 4, jedoch in gedrungenerer Ausführung;

Fig. 6 Draufsicht auf das elektrodentragende Teil einer anderen Ausführungsform (Kreisplattenform);

Fig. 7 Explosionsmodell einer Ausführungsform mit zwei elektrodentragenden Teilen;

Fig. 8 Längsschnitt durch die Ausführungsform gemäß Fig. 7 im zusammengesetzten Zustand.

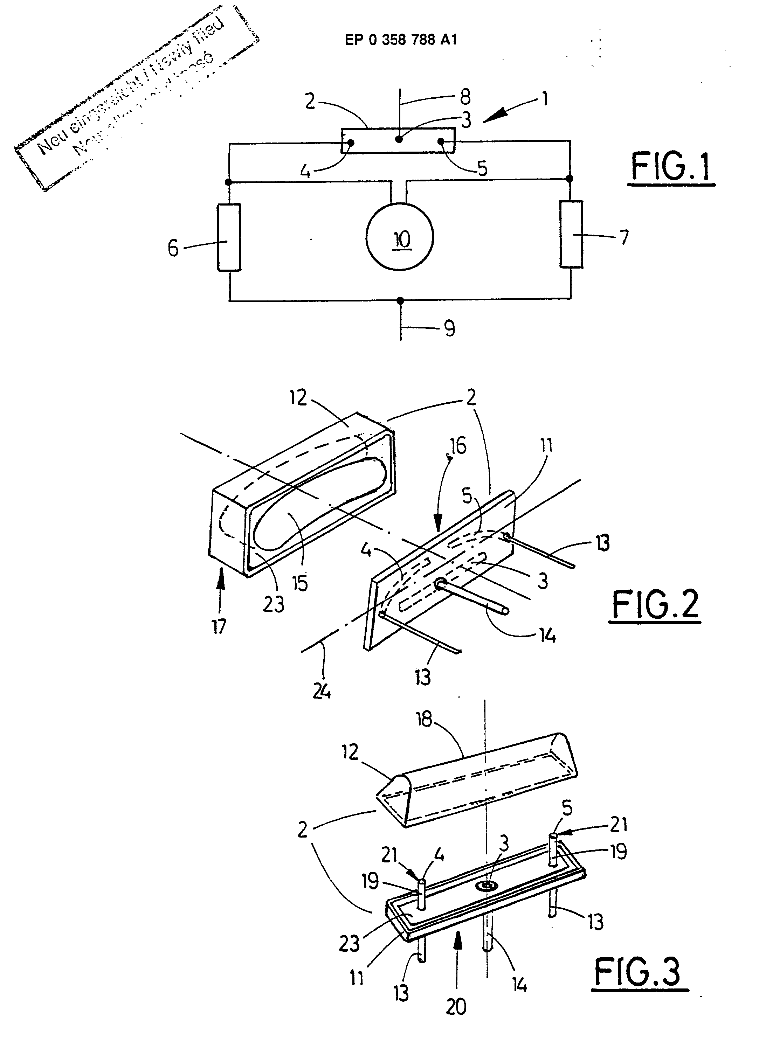

Elektrolytische Neigungsfühler ändern bei Neigung in der Ansprechrichtung ihren elektrischen Widerstand bzw. ihre elektrische Leitfähigkeit. Zur Messung dieser Änderung werden die Neigungsfühler im allgemeinen in einer Brückenschaltung angeordnet, wie sie schematisch in Fig. 1 dargestellt ist. Der Neigungsfühler ist in diesem Schaltbild mit (1) bezeichnet. Er besteht aus dem Gefäß (2), in welches wenigstens drei Elektroden eingearbeitet sind, nämlich die Gegenelektrode (3) und die beiden Meßelektroden (4,5). In der Schaltung ist der Neigungsfühler Teil einer Brückenschaltung, die aus den beiden Brückenwiderständen (6,7) und den beiden Teilstrecken des Neigungsfühlers besteht, die sich zwischen den Elektroden (3,4) einerseits und (3,5) andererseits befinden. Die Brücke wird an den Enden (8,9) mit einer geeigneten Wechselspannung versorgt, deren Frequenz beispielsweise zwischen 20 Hz und 20 kHz, vorzugsweise 400 Hz oder mehr liegt. Ein Wechsel-Spannungsmesser (10), beispielsweise ein Transistor-Millivoltmeter, ist in bekannter Weise in die Brückendiagonale eingeschal tet. Befindet sich die Brücke im Gleichgewicht, so zeigt der Spannungsmesser keine Spannungsdifferenz an. Schon bei geringer Neigung des Neigungsfühler (1) ändert sich das Gleichgewicht der Brücke, was durch Ausschlag des Spannungsmessers angezeigt wird.

Eine Ausführungsform des elektrolytischen Neigungsfühlers (1) ist im geöffneten Zustand in Fig. 2 dargestellt. Bei dieser Ausführungsform handelt es sich um eine solche, die zur hochpräzisen Ermittlung verhältnismäßig kleiner Neigungswinkel in einer Richtung dient. Der dargestellte Neigungsfühler weist ein Gefäß (2) auf, welches aus mehreren Teilen (11,12) besteht. Das Gefäßteil (11) ist als elektrodentragende Grundplatte und das Gefäßteil (12) als Abdeckhaube ausgebildet. Die Grundplatte (11) trägt insgesamt drei Elektroden, nämlich die Gegenelektrode (3) und die beiden Meßelektroden (4,5). Bei der Herstellung wird das Gefäßteil (11), also die Grundplatte, zusammen mit den aufgebrachten Elektroden sowie die Elektrodenableitungen (13,14) als ein kompaktes und hochpräzises Bauteil hergestellt. Das gleiche gilt für das Gefäßteil (12), also die Abdeckhaube. Fig. 2 läßt erkennen. daß in diesem speziellen Ausführungsfall die Abdeckhaube (12) einen Innenraum (15) aufweist, der etwa Bohnenform hat. Diese Form hat sich als besonders günstig für die Führung der Luft- oder Inertgas-Blase erwiesen.

Nach Fertigstellung der beiden Teile (11,12) werden diese miteinander verbunden, beispielsweise verlötet oder verklebt, wobei keinerlei Verzug oder sonstige Änderungen der Teile meht eintritt. Danach wird die Elektrolyt-Flüssigkeit eingefüllt und zwar durch die Elektrodenableitung (14), die als Hohlnadel ausgebildet ist. Nach dem Einfüllen der Elektrolyt-Flüssigkeit wird die Elektrodenableitung (14) verschlossen, beispielswei se zugequetscht, zugeschweißt oder zugelötet. Alle Teile der in Fig. 2 dargestellten Ausführungform sind so präzise gearbeitet, daß sie nach dem Zusammenfügen und Füllen ohne weitere Maßnahmen den gewünschten Neigungsfühler ergeben. Ist die Anordnung so getroffen, daß die Innenfläche (16) mit der Seitenfläche (17) einen rechten Winkel bildet, so kann (17) unmittelbar als Referenzebene für die Neigungsmessung verwendet werden.

Beträgt die Neigung Null, so befindet sich die Luft-oder Inertgas-Blase im Innenraum an der höchsten Stelle und bedeckt folglich mit ihren Ausläufen die beiden Meßelektroden (4,5) völlig gleichmäßig. Wird das Instrument um einen geringen Winkel geneigt, so verändert die Blase ihre Lage, wodurch auch die Bedeckung der beiden Elektroden (4,5) mit Elektrolyt-Flüssigkeit und infolgedessen die elektrische Leitfähigkeit geändert wird.

Eine weitere Ausführungsform des erfindungsgemäßen Neigungsfühlers ist in Fig. 3, dort ebenfalls perspektivisch und im geöffneten Zustand dargestellt. Auch das Gefäß (2) dieses Neigungsfühlers besteht aus zwei Teilen, nämlich dem als Grundplatte (11) ausgeführten Gefäßteil und dem Gefäßteil (12) der Abdeckhaube. Auch bei dieser Ausführungsform sind insgesamt drei Elektroden vorhanden, nämlich die Gegenelektrode (3) und die beiden Meßelektroden (4,5). Die beiden Meßelektroden sind in diesem Falle als Drahtstifte ausgebildet, welche senkrecht zur Grundplatte (11) angeordnet sind. Die Gegenelektrode (3) hat die Form eines Kreisringes, der unmittelbar auf die Grundplatte aufgesintert oder aufgeklebt ist. Auch bei dieser Ausführungsform ist die Elektrodenableitung (14) als Röhrchen ausgebildet, welches zum Füllen des Instrumentes mit Elektrolyt-Flüssigkeit dient.

Die Abdeckhaube (12) hat bei dieser Ausführungsform die Form eines langgestreckten Daches mit V-förmigem Querschnitt. Darüber hinaus ist der First (18) der Abdeckhaube abgerundet, wodurch der Neigungsfühler gegen Vibration sowie gegen Querneigung stabilisiert wird.

Fig. 3 läßt des weiteren erkennen, daß die Meßelektroden (13) im Basisbereich eine Abdeckung (19) aufweisen. Diese Abdeckung besteht aus elektrisch nicht leitfähigem Material, beispielsweise aus Glas oder Keramik und sie ist mit der Grundplatte (11) verschmolzen. Die Ausführung läßt sich fabrikatorisch so einrichten, daß die Basisfläche (20) exakt parallel zu derjenigen Fläche verläuft, die durch die freien Enden (21) der Abdeckungen (19) definiert ist. Dadurch wird der Vorteil erzielt, daß die Basisfläche (20) unmittelbar als Referenzfläche für die Neigungsmessung verwendet werden kann.

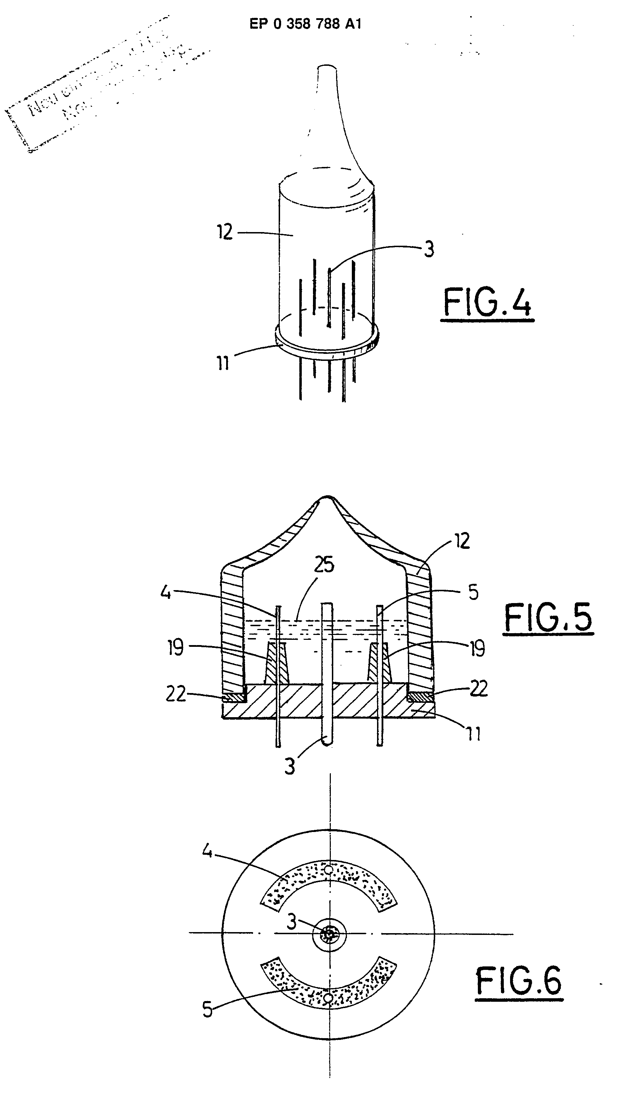

Vorzugsweise soll das die Elektroden (3,4) tragende Teil (11) aus Sinterkeramik, Sinterglas oder Preßglas bestehen, wobei die verwendeten Gläser eine über 600 °C liegende Erweichungstemperatur ($t_1$) aufweisen sollten. Das andere Teil (12) sollte aus dem gleichen Werkstoff, beispielsweise ebenfalls aus Glas mit über 600 °C liegender Erweichungstemperatur bestehen. Die beiden Teile (11,12) sind zur flüssigkeits- und gasdichten Verbindung beispielsweise über eine Zwischchenglasschicht (22) (Fig. 5) miteinander verbunden, deren Schmelztemperatur ($t_2$) wenigstens 100 °C niedriger liegt als die Temperatur ($t_1$).

Ein wesentlicher Vorteil dieses Aufbaues besteht darin, daß das Teil (11) beispielsweise aus reinem Aluminiumoxid oder auch aus Steatit (3 $MgO \bullet 4\,SiO_2 \bullet H_2O$) oder aus Hartporzellan hergestellt werden kann. Zur Herstellung wird das Teil zunächst in einem geeigneten Formwerkzeug unter Anwendung von Druck in der Größenordnung von 10-100 kp/cm² gepreßt. Das so vorbereitete Preßstück wird alsdann im Vakuum oder unter Schutzgas bei Temperaturen von etwa 1500-1600 °C zu einem dichten Werkstück gesintert. Dabei können die Elektroden nebst ihren Ableitungen schon mit eingesintert werden. Die Elektroden können beispielsweise aus Platin oder einer Platinlegierung bestehen. Das Preßstück hält dabei die ihm erteilten Dimensionen präzise bei. Auch bei den nachfolgenden Arbeitsgängen verändert sich das Teil (11) nebst den darauf angeordneten Elekroden nicht mehr, wodurch eine maschinelle hochpräzise und ausschußarme Produktion möglich wird.

Das Teil (12) kann aus Preßglas erzeugt werden, wobei an die Formstabilität dieses Teiles nicht so hohe Ansprüche gestellt werden. Es muß jedoch verlangt werden, daß das Teil mit dem erstgenannten (11) verbunden werden kann, ohne daß es etwa wegen zu niedrigen Schmelzpunktes völlig zusammenschmelzen würde. Die flüssigkeits- und gasdichte Verbindung der beiden Teile kann auf verschiedenem Wege hergestellt werden, beispielsweise indem die beiden Teile mit Hilfe eines Glaslotes, welches einen Schmelzpunkt, der niedriger liegt als der Erweichungspunkt der beiden Teile (11,12) verbunden, also zusammengeschmolzen werden. Die Verbindung der beiden Teile (11,12) kann auch dadurch erzielt werden, daß die beiden Teile an den beim Zusammenfügen aufeinanderstoßenden Stellen zunächst metallisiert werden und daß dann ein geeignetes Metallot beispielsweise auf Pb-Sn-Basis zwischengefügt wird. Schließlich ist es möglich, die beiden Teile mit Hilfe eines geeigneten organischen Klebstoffes, beispielsweise eines Zwei-Komponenten-Kle-bers, zusammenzukleben.

Bei den in den Fig. 2 und 3 dargestellten Ausführungsformen des Teiles (11) ist eine Besonderheit zu erkennen. Das Teil weist im Randbereich eine in sich geschlossene Nut (23) auf, die im dargestellten Falle dadurch zustande kommt, daß das plattenförmige Teil (11) an seinem Rand gegenüber dem Mittenbereich sprungartig erhöht ist. Die Nut hat in diesem Fall also die Form einer Stufe; sie ist nur einseitig, nämlich nach außen begrenzt. Das Teil (12) greift in diese stufenförmige Nut mit seinem unteren Rande ein, wodurch das Teil (12) in seiner Lage fixiert wird.

Bei der in Fig. 2 dargestellten Ausführungsform haben die auf dem Teil (11) angeordneten Elektroden die Form von verhältnismäßig langen schmalen Streifen. Elektroden dieser Form können aus Metallblech, beispielsweise Platinblech, erzeugt und schon beim Pressen und Sintern in das Teil (11) mit eingeformt werden. Andererseits ist es auch möglich, Elektroden gleicher Form dadurch zu erzeugen, daß das Teil (11) in den gewünschten Bereichen metallisiert wird. Es kann dies in bekannter Weise dadurch geschehen, daß eine Metallisierungspaste aufgedruckt oder sonstwie aufgetragen und das Teil als Ganzes danach auf eine erhöhte Temperatur erhitzt wird. Beim Erhitzen scheidet die Metallisierungspaste Metall, beispielsweise Silber oder Kupfer, ab, welches auf der Oberfläche des aus keramischem Werkstoff oder Glas bestehenden Teiles fest auf- bzw. in die oberste Schicht einbrennt.

Fig. 2 läßt auch erkennen, daß bei dieser Ausführungsform die Meßelektroden (4,5) mit der Längsachse (24) einen spitzen Winkel bilden. Eine derartige Anordnung ist sinnvoll, um die Kennlinie, also die Abhängigkeit des beim Gebrauch gemessenen Leitfähigkeitswertes vom Neigungswinkel in gewünschter Weise zu beeinflussen.

In den Figuren 4-8 sind andere Formen von Neigungsfühlern dargestellt, bei denen das die Elektroden tragende Teil (11) die Form einer Kreisscheibe hat. Die Gegenelektrode (3) ist bei der Ausführungsform gemäß Fig. 6 als kleinere Kreisscheibe oder als Kreisring ausgebildet und die Meßelektroden (4,5) umgeben die Gegenelektrode (3) als Kreisringabschnitte.

In Fig. 4 ist eine andere Ausführung des elektrolytischen Neigungsfühlers dargestellt, der die Form einer kleinen Röhre hat. Fig. 4 läßt erkennen, daß in diesem Fall außer der Gegenelektrode (3) insgesamt vier Meßelektroden vorhanden sind. Eine derartige Ausführungsform eines Neigungsfühlers kann zur Erfassung zweier Neigungsebenen, die beispielsweise aufeinander senkrecht stehen, dienen. Die Elektroden sind als senkrecht angeordnete Stiftelektroden ausgeführt; im übrigen ist diese Ausführungsform ebenso aus zwei Teilen (11,12) zusammengesetzt wie die Ausführungsformen gemäß den Fig. 2 und 3.

Aus Fig. 5 ist zu ersehen, daß sowohl die Gegenelektrode (3) wie auch die Meßelektroden (4,5) in das Teil (11) eingeschmolzen oder eingesetzt sind. Die Gegenelektrode hat dabei in schon erwähnter Weise die Gestalt einer Hohlnadel. Sie reicht durch das Teil (11) hindurch, ist aber im übrigen oberhalb des Teiles (11) völlig unbedeckt, so daß sie auf ihrer gesamten Oberfläche von der Electrolyt-Flüssigkeit umspült werden kann. Die beiden Meßelektroden (4,5) sind Drahtstifte, die um unteren Bereich durch angeschmolzene Abdeckungen (19) gegen Berührung der Elektrolyt-Flüssigkeit geschützt sind. Der Oberflächenspiegel der eingefüllten Elektrolyt-Flüssigkeit ist in Fig. 5 mit (25) bezeichnet. Man erkennt, daß in waagerechter neigungsfreier Lage die beiden Meßelektroden (4,5) in gleicher Weise vom Elektrolyten umspült werden. Wird der Neigungsfühler beispielsweise derart geneigt, daß seine Grundplatte links niedriger liegt als rechts, so wird die Meßelektrode (4) in stärkerem Maße, die Meßelektrode (5) in geringerem Maße von der Elektrolyt-Flüssigkeit bedeckt. Durch Änderung dieser geometrischen Verhältnisse wird sich auch der Leitwert ändern, der dann wie zuvor geschildert, mit Hilfe einer elektrischen Brückenschaltung gemessen und angezeigt wird. Derselbe Vorgang, der anhand der Fig. 5 in einer Neigungsrichtung erläutert wurde, spielt sich auch in Richtung senkrecht dazu ab, sofern ein Neigungsfühler mit insgesamt fünf Elektroden verwendet wird, wie er in Fig.4 dargestellt ist.

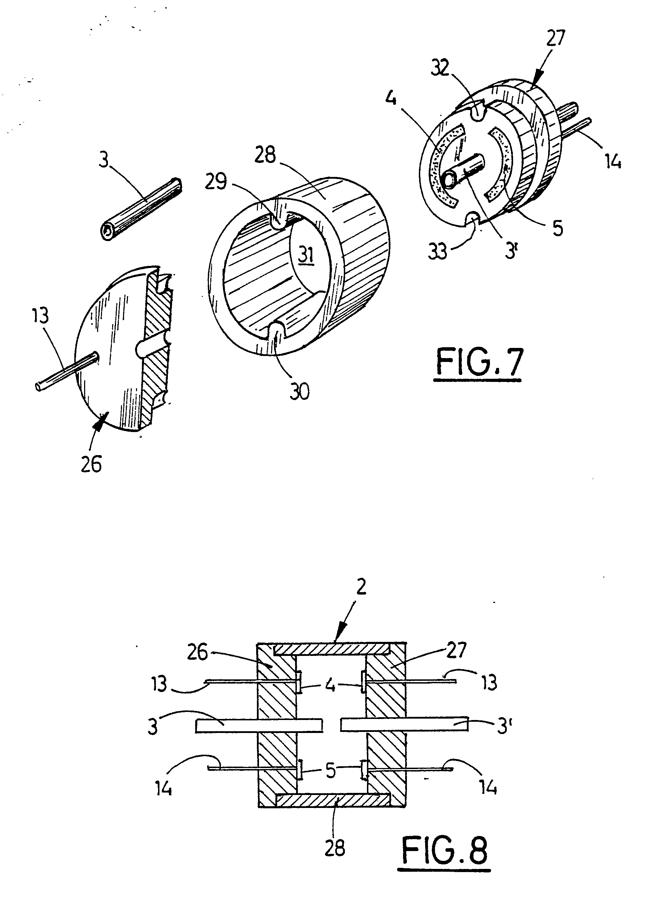

In den Fig. 7 und 8 ist ein Neigungsfühler dargestellt, dessen Gefäß (2) aus zwei Abschlußplatten (26,27) besteht, die jeweils Meßelektroden (4,5) mit dazugehörenden Ableitungen (13,14) tragen. Bei der dargestellten Ausführungsform sind die Abschlußplatten (26,27) so ausgeführt, daß sie zum Teil in das Innere des Verbindungsteiles (28) eingreifen, zum Teil aber außen an diesem anliegen. Damit eine Verdrehung der Abschlußplatten gegeneinander nicht möglich ist, sind in das ringförmige Verbindungsteil (28) Vorsprünge (29,30) angeformt, die in den Innenraum (31) hineinragen. Die beiden Abschlußplatten (26,27) weisen entsprechende Aussparungen (32,33) auf, in die die Vorsprünge (29,30) als Paßmarken hineinpassen.

Der Zweck dieser Anordnung, insbesondere der doppelt vorhandenen Elektroden (4,5) ist, daß der so aufgebaute Neigungsfühler gegen zusätzliche Neigung in Richtung quer zur Meßneigungsrichtung oder gegen Vibrationen unempfindlich wird. Wird ein derartiger Fühler, der in der in Fig. 7 dargestellten Lage eingesetzt wird, quer dazu geneigt, so kann der Fall eintreten, daß die Elektrolyt-Flüssigkeit die oben links angeordneten Elektroden in Folge dieser an sich unerwünschten Zusatzneigung mehr benetzt. Zwangsläufig wird aber die gegenüberliegende Elektrode weniger benetzt, so daß sich beide Benetzungen ausgleichen, sofern die beiden miteinander korrespondierenden Elektroden innerhalb oder außerhalb des Fühlers elektrisch miteinander verbunden sind. Die doppelte Anordnung der Elektroden kann indes auch zu anderen Zwecken eingesetzt werden, beispielsweise indem zwei unabhängig voneinander entstehende Signale für die gleiche Neigung gewonnen werden. Es wird deshalb bevorzugt, die Elektroden nicht, innerhalb des Fühlers sondern außerhalb des Fühlers miteinander zu verbinden, beispielsweise im Bereich der ohnehin erforderlichen elektrischen Meßschaltung.

Die beiden Gegenelektroden (3,3′) sind jeweils auf einer Abschlußplatte angeordnet und durchdringen diese längsaxial, so daß sie den Gefäßinnenraum (31) hineinragen und sich dort gegenüberstehen. Auch in diesem Fall sind die beiden Gegenelektroden (3,3′) als Hohlnadeln ausgebildet. Die Elektrolyt-Flüssigkeit kann beispielsweise durch die Hohlnadel (3) eingefüllt werden, wobei dann die im Innenraum (31) ursprünglich vorhandene Luft durch die andere Hohlnadel (3′) entweicht. Ist der Füllvorgang abgeschlossen, so werden die Hohlnadeln in bekannter Weise zugelötet oder zugequetscht.

## Bezugszeichen

1 Neigungsfühler
2 Gefäß
3 Gegenelektrode
4,5 Meßelektrode
6,7 Brückenwiderstand
8,9 Brückenende
10 Spannungsmesser
11 Gefäßteil = Grundplatte
12 Gefäßteil = Abdeckhaube
13,14 Elektroden-Ableitung
15 Innenraum

16 Innenfläche
17 Seitenfläche
18 First
19 Abdeckung
20 Basisfläche
21 Freie Enden von (19)
22 Zwishchenglasschicht
23 Nut
24 Längsachse
25 Oberflächenspiegel
26,27 Abschlußplatte
28 Verbindungsteil
29,30 Vorsprung
31 Innenraum
32,33 Aussparung

## Ansprüche

1. Elekrolytischer Neigungsfühler mit wenigstens drei in einem gasdicht verschlossenen Gefäß angeordneten, nach außen geführten und gegeneinander isolierten Elektroden,
welches Gefäß teilweise mit einer elektrisch leitfähigen Flüssigkeit und der Rest mit Luft oder einem Inertgas gefüllt ist,
wobei wenigstens eine Elektrode (Gegenelektrode) so angeordnet ist, daß sie in jeder Gebrauchslage des Neigungsfühlers von der Flüssigkeit berührt wird und wobei die anderen Elektroden so angeordnet sind, daß sie in der Null-Lage des Neigungsfühlers in gleichem Maße, vorzugsweise jedoch nur teilweise von der Flüssigkeit bedeckt werden,
dadurch gekennzeichnet,
daß das Gefäß (2) aus mehreren Teilen (11,12) besteht, die flüssigkeits- und gasdicht miteinander verbunden sind,
wobei wenigstens eines dieser Teile (11,26,27) als Elektrodenträger- und Durchführ-Teil für die Ableitungen der auf dem Teil angeordneten Elektroden ausgebildet ist und
wenigstens ein weiteres Teil (12,28) als Abdeckoder Verbindungselement für das oder die Elektrodenträger-Teile dient.

2. Elektrolytischer Neigungsfühler nach Anspruch 1,
dadurch gekennzeichnet,
daß die Teile (11,12,26,27,28) aus Sinterkeramik oder aus Glas mit über 600°C liegender Erweichungs temperatur (t1) bestehen und über eine Zwischenglasschicht (22) miteinander verbunden sind, deren Schmelztemperatur (t2) wenigstens 100°C niedriger liegt als die Erweichungstemperatur (t1).

3. Elektrolytischer Neigungsfühler nach einem der vorstehenden Ansprüche,
dadurch gekennzeichnet,

daß die Teile (11,12,26,27,28) an ihren Berührungsstellen metallisiert und mittels Metallot miteinander verbunden sind.

4. Elektrolytischer Neigungsfühler nach Anspruch 1,
dadurch gekennzeichnet,
daß die Teile (11,12,26,27,28) miteinander verklebt sind.

5. Elektrolytischer Neigungsfühler nach einem der Ansprüche 1 bis 4,
dadurch gekennzeichnet,
daß die die Elektroden tragenden Teile (11,26,27) eine im Randbereich liegende, in sich geschlossene Nut (23) aufweisen, in die das andere Teil (12,28) flüssigkeits- und gasdicht eingefügt ist.

6. Elektrolytischer Neigungsfühler nach einem der vorausgehenden Ansprüche,
dadurch gekennzeichnet,
daß die Elektroden auf dem sie tragenden Teil (11,26,27) in Form von metallisierten Flächen oder Bahnen angeordnet sind.

7. Elektrolytischer Neigungsfühler nach einem der vorausgehenden Ansprüche,
dadurch gekennzeichnet,
daß zumindest die Meßelektroden (4,5) mit der Längs achse (24) des die Elektroden tragenden Teiles (11) einen spitzen Winkel bilden.

8. Elektrolytischer Neigungsfühler nach einem der vorausgehenden Ansprüche,
dadurch gekennzeichnet,
daß die die Elektroden tragenden Teile (11,26,27) die Form einer Kreisscheibe haben, in deren Mittenbereich die Gegenelektrode (3) als kleinere Kreisscheibe oder als Kreisring angeordnet ist, und daß die Meßelektroden (4,5) die Gegenelektrode (3) als Kreisringabschnitte konzentrisch umgeben.

9. Elektrolytischer Neigungsfühler nach einem der vorausgehenden Ansprüche,
dadurch gekennzeichnet,
daß die Ableitung wenigstens einer Elektrode als Hohlnadel ausgebildet ist und außer als Elektrodenanschluß zum Füllen des Gefäßes dient.

10. Elektrolytischer Neigungsfühler nach einem der vorausgehenden Ansprüche,
dadurch gekennzeichnet,
daß die Elektroden (3,4,5) Drahtstifte sind, die durch das elektrodentragende Teil (11,26,27) hindurchgeführt sind und die im Basisbereich eine Abdeckung (19) aus elektrisch nicht leitendem Werkstoff aufweisen.

11. Elekrolytischer Neigungsfühler nach Anspruch 10,
dadurch gekennzeichnet,
daß die untere Fläche des die Elektroden tragenden Teiles (11) parallel verläuft zu der Fläche, die durch die freien Enden (21) der Abdeckungen (19) definiert ist.

12. Elektrolytischer Neigungsfühler nach einem der Ansprüche 1 bis 7,
dadurch gekennzeichnet,
daß das elektrodentragende Teil (11,26,27) im Gebrauchszustand eine Seitenwand bildet, deren Innenfläche (16) mit der Seitenfläche (17) des Gefäßteiles (12) einen rechten Winkel bildet.

13. Elektrolytischer Neigungsfühler nach einem der Ansprüche 1 bis 7,9,10 oder 11,
dadurch gekennzeichnet,
daß das Gefäßteil (12) die Form eines langgestreckten Daches mit V-förmigem Querschnitt hat.

14. Elektrolytischer Neigungsfühler nach Anspruch 14,
dadurch gekennzeichnet,
daß der First (18) des Gefäßteiles (12) abgerundet ist.

15. Elektrolytischer Neigungsfühler nach Anspruch 1,
dadurch gekennzeichnet,
daß das Gefäß (2) aus zwei jeweils als Elektrodenträger-und Durchführ-Teil ausgebildeten Abschlußplatten (26,27) sowie einem ringförmigen Verbindungsteil (28) besteht,
wobei je eine Abschlußplatte an jeder Seite flüssigkeits- und gasdicht an dem Verbindungsteil befestigt ist.

16. Elektrolytischer Neigungsfühler nach Anspruch 15,
dadurch gekennzeichnet,
daß das Verbindungsteil (28) ein Rohrabschnitt ist, in dessen Innenraum (31) wenigstens ein Vorsprung (29,30) hineinragt und daß die beiden Abschlußplatten (26,27) Aussparungen (32,33) aufweisen, die den oder die Vorsprünge als Paßmarken aufnehmen.

17. Elektrolytischer Neigungsfühler nach Anspruch 15,
dadurch gekennzeichnet,
daß die beiden Abschlußplatten (26,27) jeweils gleiche Elektrodenanordnungen aufweisen und daß einander entsprechende Elektroden innerhalb oder außerhalb des Gefäßes (2) elektrisch miteinander verbunden sind.

18. Elektrolytischer Neigungsfühler nach Anspruch 15,16 oder 17,
dadurch gekennzeichnet,
daß auf jeder Abschlußplatte (26,27) eine längsaxial in den Gefäßraum ragende rohrförmige Mittelelektrode vorhanden ist, welche bei Betrieb der Vorrichtung als Gegenelektrode und bei der Herstellung als Füll- bzw. Luft-Entweichungs-Kanüle wirkt.

Neu eingereicht / Newly filed
Nouve...

FIG.1

FIG.2

FIG.3

EP 0 358 788 A1

FIG.4

FIG.5

FIG.6

FIG.7

FIG.8

**Europäisches Patentamt**

# EUROPÄISCHER RECHERCHENBERICHT

Nummer der Anmeldung

EP 88 11 4943

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 244 117 (CANTARELLA et al.)<br>* Figuren 2,3; Spalte 6, Zeile 65 - Spalte 7, Zeile 18 *<br>--- | 1,7,8, 12 | G 01 C 9/20<br>G 01 C 9/06 |
| X | US-A-3 823 486 (BHAT et al.)<br>* Figuren 1-5; Ansprüche 1,3; Spalte 5, Zeilen 58-65 *<br>--- | 1,6,9, 12 | |
| X | US-A-3 442 023 (REMINGTON et al.)<br>* Insgesamt *<br>--- | 1,15,17 | |
| X | US-A-2 720 569 (SCHOEPPEL et al.)<br>* Figur 1; Spalte 3, Zeile 17 - Spalte 4, Zeile 46 *<br>----- | 1,7,9 | |
| | | | **RECHERCHIERTE SACHGEBIETE (Int. Cl.4)**<br><br>G 01 C<br>G 01 P |

Der vorliegende Recherchenbericht wurde für alle Patentansprüche erstellt

| Recherchenort | Abschlußdatum der Recherche | Prüfer |
|---|---|---|
| DEN HAAG | 27-04-1989 | KOLBE W.H. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.......................................................................
& : Mitglied der gleichen Patentfamilie, übereinstimmendes Dokument